(19) Europäisches Patentamt / European Patent Office / Office européen des brevets

(11) **EP 4 137 530 A1**

(12) **EUROPEAN PATENT APPLICATION**
published in accordance with Art. 153(4) EPC

(43) Date of publication:
**22.02.2023 Bulletin 2023/08**

(21) Application number: **21788745.4**

(22) Date of filing: **31.03.2021**

(51) International Patent Classification (IPC):
**C08J 3/12** (2006.01)     **B29B 7/42** (2006.01)
**B29B 9/12** (2006.01)     **C08F 8/04** (2006.01)
**C08J 99/00** (2006.01)

(52) Cooperative Patent Classification (CPC):
**B29B 7/42; B29B 9/12; C08F 8/04; C08J 3/12; C08J 99/00**

(86) International application number:
**PCT/JP2021/013767**

(87) International publication number:
**WO 2021/210400 (21.10.2021 Gazette 2021/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.04.2020 JP 2020072483**

(71) Applicant: **Idemitsu Kosan Co., Ltd**
**Tokyo 100-8321 (JP)**

(72) Inventors:
• **YOKOTA, Kiyohiko**
  **Ichihara-shi, Chiba 299-0193 (JP)**
• **SUZUKI, Kazuhiko**
  **Chiba-shi, Chiba 261-7134 (JP)**

(74) Representative: **Gille Hrabal**
**Partnerschaftsgesellschaft mbB**
**Patentanwälte**
**Brucknerstraße 20**
**40593 Düsseldorf (DE)**

(54) **HYDROGENATED PETROLEUM RESIN PELLET AND METHOD FOR PRODUCING HYDROGENATED PETROLEUM RESIN PELLET**

(57)     A hydrogenated petroleum resin pellet having an emission amount of a volatile component of 10 ppm by mass or less.

EP 4 137 530 A1

**Description**

Technical Field

The present invention relates to a hydrogenated petroleum resin pellet and a method for producing the hydrogenated petroleum resin pellet.

Background Art

In recent years, hot melt adhesives obtained by blending a thermoplastic compound as a base polymer and an additive such as a tackifier have been used in various fields such as production of sanitary goods, bookbinding, and various packaging.

Examples of the thermoplastic compound serving as the base polymer of the hot melt adhesive include a natural rubber, an ethylene-vinyl acetate copolymer (EVA), an amorphous polyalphaolefin, a styrene-butadiene-styrene block copolymer (SBS), a styrene-isoprene-styrene block copolymer (SIS), and a styrene-ethylene-butylene-styrene rubber (SEBS) and a styrene-ethylenepropylene-styrene rubber (SEPS) obtained by hydrogenation of these rubber components.

Examples of the tackifier serving as the additive of the hot melt adhesive include a rosin-based resin, a terpene-based resin, a petroleum resin, and a hydrogenated product thereof. Among them, a petroleum resin, particularly a hydrogenated petroleum resin is preferably used from the viewpoint of suitability for industrial production and high quality stability.

So far, a hot melt adhesive containing a hydrogenated petroleum resin as a tackifier has been used. In particular, when a hot melt adhesive is used in the production of sanitary goods such as disposable diapers, there is a concern that odor derived from volatile organic compounds (VOC) contained in the product may cause discomfort to a user, may adversely affect health, or the like, and various studies have been conducted.

For example, PTL 1 discloses, as a petroleum resin and a hydrogenated petroleum resin having a low content of a volatile organic compound component and excellent low odor properties, a petroleum resin and a hydrogenated petroleum resin in which the content of the volatile organic compound component is less than 100 wt ppm.

PTL 2 discloses a method for deodorizing a hydrogenated petroleum resin, which includes stripping the hydrogenated petroleum resin at a specific gas flow rate for the purpose of effectively reducing an odor component coexisting in the hydrogenated petroleum resin and adjusting the softening point to an appropriate range.

Citation List

Patent Literature

[PTL 1] WO 2019/172434 A
[PTL 2] WO 2019/189296 A

Summary of Invention

Technical Problem

PTL 1 and PTL 2 disclose that a hydrogenated petroleum resin having a low odor is obtained, but there is no description as to which method is used to commercialize the obtained resin.

When a hydrogenated petroleum resin is used in a hot melt adhesive or the like as described above, it is essential to make the resin into a product in a form that is easy to blend. Among them, it is usually commercialized as a pellet which is also excellent in transporting capability and metering easiness. However, in order to obtain a hydrogenated petroleum resin having a low odor, an odor component is generated during the period from the time when the resin is devolatilized to the time when the resin is pelletized, and the odor of the resin pellets as a product may become a problem.

Accordingly, the present invention has been made to solve the above-mentioned problems, and an object of the present invention is to provide a hydrogenated petroleum resin pellet having a low odor and a method for producing the same.

Solution to Problem

As a result of intensive studies in view of the above problems, the present inventors have found that the above problems can be solved by a hydrogenated petroleum resin pellet in which an emission amount of a volatile component is a specific amount or less and a production method for obtaining the same, and have completed the present invention.
That is, the present invention is as follows.

[1] A hydrogenated petroleum resin pellet having an emission amount of a volatile component defined below of 10 ppm by mass or less, wherein the emission amount of the volatile component is an amount based on the hydrogenated petroleum resin in which all components having a retention time less than the retention time of n-dodecane measured by a head space gas chromatography method are converted to ethylcyclohexane.
[2] The hydrogenated petroleum resin pellet as set forth in the above [1], wherein an emission amount of a main decomposition component defined below is 5 ppm by mass or less, wherein the emission amount of the main decomposition component is an amount based on the hydrogenated petroleum resin in which tricyclodecenes and styrene measured by a head space gas chromatography method are converted to ethylcyclohexane.
[3] The hydrogenated petroleum resin pellet as set forth in the above [2], wherein the tricyclodecenes are tricyclo-3-decene and tricyclo-8-decene.
[4] The hydrogenated petroleum resin pellet as set forth in the above [2] or [3], wherein the emission amount of the volatile component is 5 ppm by mass or less, and the emission amount of the main decomposition component is 3 ppm by mass or less.
[5] The hydrogenated petroleum resin pellet as set forth in any one of the above [1] to [4], wherein the hydrogenated petroleum resin constituting the hydrogenated petroleum resin pellet contains a hydrogenated product of a copolymer of a cyclopentadiene-based compound and a vinyl aromatic compound.
[6] The hydrogenated petroleum resin pellet as set forth in the above [5], wherein the copolymer is obtained by thermal polymerization of a cyclopentadiene-based compound and a vinyl aromatic compound.
[7] The hydrogenated petroleum resin pellet as set forth in the above [6], wherein the cyclopentadiene-based compound is at least one selected from the group consisting of cyclopentadiene and dicyclopentadiene.
[8] A method for producing a hydrogenated petroleum resin pellet, including:

   step 1 of devolatilizing a hydrogenated petroleum resin in a devolatilization apparatus;
   step 2 of transferring the hydrogenated petroleum resin from the devolatilization apparatus to a forming apparatus for pelletizing; and
   step 3 of obtaining a hydrogenated petroleum resin pellet in the forming apparatus for pelletizing,
   wherein the temperature from the completion of step 1 until the hydrogenated petroleum resin pellet is obtained in step 3 is 235°C or lower, and the time from the completion of step 1 until the hydrogenated petroleum resin pellet is obtained in step 3 is 1 hour or less.

[9] The method for producing a hydrogenated petroleum resin pellet as set forth in the above [8], wherein the temperature from the completion of step 1 until the hydrogenated petroleum resin pellet is obtained in step 3 is 230°C or lower, and the time from the completion of step 1 until the hydrogenated petroleum resin pellet is obtained in step 3 is 40 minutes or less.
[10] A method for producing a hydrogenated petroleum resin pellet, including:

   step 1 of devolatilizing a hydrogenated petroleum resin in a devolatilization apparatus;
   step 2 of transferring the hydrogenated petroleum resin from the devolatilization apparatus to a forming apparatus for pelletizing; and
   step 3 of obtaining a hydrogenated petroleum resin pellet in the forming apparatus for pelletizing,
   wherein an index value is set so that an emission amount of a volatile component from the obtained hydrogenated petroleum resin pellet does not exceed a target value, and step 2 and step 3 are performed so that the temperature (T) and the time (t) from the completion of step 1 until the hydrogenated petroleum resin pellet is obtained in step 3 satisfy the following formula (1):

$$t \times [\exp(A - E/RT)] \leq \text{index value} \qquad (1)$$

wherein A is a frequency factor, E is an activation energy, and R is a gas constant.

[11] The method for producing a hydrogenated petroleum resin pellet as set forth in the above [10], wherein the frequency factor A and the activation energy E are represented by the following formulas (2) and (3):

$$A = C_{21} \times \mu^2 + C_{11} \times \mu + C_{01} \qquad (2)$$

$$E = C_{22} \times \mu^2 + C_{12} \times \mu + C_{02} \qquad (3)$$

wherein $\mu$ is a viscosity of the hydrogenated petroleum resin at 200°C, and $C_{21}$, $C_{11}$, $C_{01}$, $C_{22}$, $C_{12}$ and $C_{02}$ are coefficients, respectively.

[12] The method for producing a hydrogenated petroleum resin pellet as set forth in any one of the above [8] to [11], wherein an emission amount of a volatile component of the hydrogenated petroleum resin at the completion of step 1 is 5 ppm by mass or less.

[13] The method for producing a hydrogenated petroleum resin pellet as set forth in any one of the above [10] to [12], wherein the target value of an emission amount of the volatile component from the hydrogenated petroleum resin pellet is 10 ppm by mass or less.

Advantageous Effects of Invention

According to the present invention, it is possible to provide a hydrogenated petroleum resin pellet with less odor and a method for producing the hydrogenated petroleum resin pellet.

Brief Description of Drawings

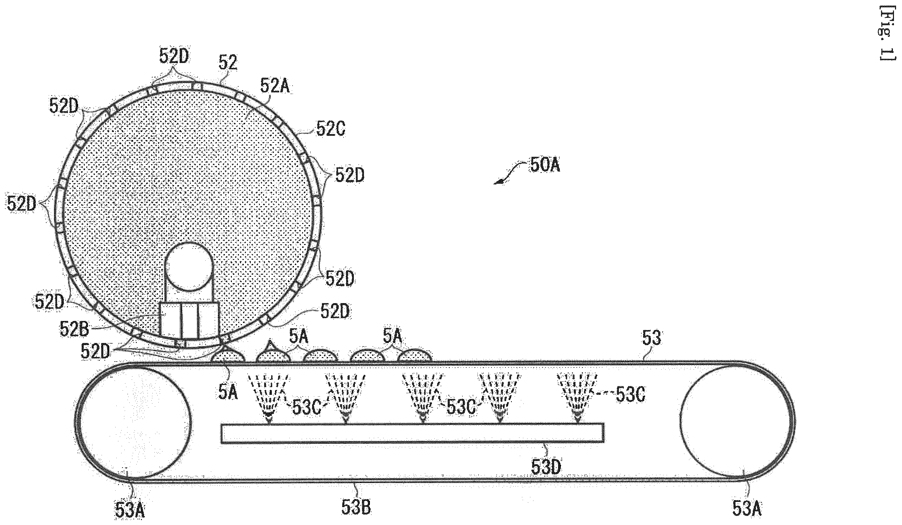

FIG. 1 is a diagram showing an example of a forming apparatus for pelletizing used in a method for producing a hydrogenated petroleum resin pellet of the present invention.

Description of Embodiments

[Hydrogenated Petroleum Resin Pellet]

The hydrogenated petroleum resin pellet of the present invention has an emission amount of a volatile component defined below of 10 ppm by mass or less, wherein the emission amount of the volatile component is an amount based on the hydrogenated petroleum resin in which all components having a retention time less than the retention time of n-dodecane measured by a head space gas chromatography method are converted to ethylcyclohexane.

(Hydrogenated Petroleum Resin and Method for Producing Hydrogenated Petroleum Resin)

The hydrogenated petroleum resin pellet of the present invention is composed of a hydrogenated petroleum resin, and the hydrogenated petroleum resin constituting the hydrogenated petroleum resin pellet preferably contains a hydrogenated product of a copolymer of a cyclopentadiene-based compound and a vinyl aromatic compound, and more preferably is a hydrogenated product of a copolymer of a cyclopentadiene-based compound and a vinyl aromatic compound.

The copolymer is preferably obtained by thermal polymerization of a cyclopentadiene-based compound and a vinyl aromatic compound.

Further, the cyclopentadiene-based compound is more preferably at least one selected from the group consisting of cyclopentadiene and dicyclopentadiene.

A method for obtaining the hydrogenated petroleum resin constituting the hydrogenated petroleum resin pellet of the present invention is not particularly limited, but the hydrogenated petroleum resin is preferably obtained by carrying out a copolymerization reaction and a hydrogenation reaction shown below.

<Copolymerization Reaction Step>

In the copolymerization reaction, it is preferable to employ a polymerization reaction tank equipped with a heating apparatus, a pressurizing apparatus and a stirring apparatus, and to use a cyclopentadiene-based compound as a first raw material and a vinyl aromatic compound as a second raw material. Then, the cyclopentadiene-based compound and the vinyl aromatic compound are preferably subjected to a copolymerization reaction in a polymerization solvent under predetermined conditions to produce a copolymer (hereinafter also referred to as a petroleum resin).

Here, the copolymer is preferably obtained by thermal polymerization of the cyclopentadiene-based compound and the vinyl aromatic compound.

More specifically, the copolymer is preferably obtained by thermal polymerization of styrene and at least one selected from the group consisting of cyclopentadiene and dicyclopentadiene.

As the polymerization reaction tank, a tank to which a first raw material tank, a second raw material tank, and a polymerization solvent tank are connected can be used. The first raw material tank and the second raw material tank store a first raw material and a second raw material, respectively, and the polymerization solvent tank stores a polymerization solvent.

The polymerization reaction tank may be designed such that the polymerization solvent is first supplied from the polymerization solvent tank, and then the first raw material and the second raw material are appropriately supplied from the first raw material tank and the second raw material tank, respectively. In addition, it is possible to provide an opening-closing port at the bottom of the polymerization reaction tank so that the copolymer produced by the copolymerization reaction can flow out to the outside.

When the first raw material and the second raw material are mixed in advance, only one raw material tank may be provided.

Here, examples of the cyclopentadiene-based compound include cyclopentadiene, methylcyclopentadiene, ethylcyclopentadiene, and dimers and codimers thereof, and at least one selected from the group consisting of cyclopentadiene and dicyclopentadiene is more preferable. Examples of the vinyl aromatic compound include styrene, α-methylstyrene, β-methylstyrene, vinyltoluene, vinylxylene, indene, methylindene, and ethylindene.

The cyclopentadiene-based compound and the vinyl aromatic compound may be individually supplied to the polymerization reaction tank, or may be mixed with each other in advance to form a monomer mixture, and then supplied to the polymerization reaction tank.

The mixing ratio of the cyclopentadiene-based compound and the vinyl aromatic compound is not particularly limited, but is preferably (cyclopentadiene-based compound):(vinyl aromatic compound) = 70:30 to 20:80, and more preferably 60:40 to 40:60 in terms of mass ratio.

Typical examples of the polymerization solvent used in the copolymerization reaction of the cyclopentadiene-based compound and the vinyl aromatic compound include an aromatic-based solvent, a naphthene-based solvent, and an aliphatic hydrocarbon-based solvent. As specific examples of the polymerization solvent, toluene, xylene, cyclohexane, methylcyclohexane, dimethylcyclohexane, ethylcyclohexane are preferably used.

The amount of the polymerization solvent used is preferably 50 to 500 parts by mass, more preferably 60 to 300 parts by mass, still more preferably 60 to 200 parts by mass, and even more preferably 70 to 150 parts by mass with respect to 100 parts by mass of the monomer mixture.

The polymerization solvent supplied into the polymerization reaction tank is preferably preheated to a temperature of preferably 100°C or higher, more preferably 150°C or higher, and still more preferably 200°C or higher, from the viewpoint of smoothly initiating thermal polymerization. It is preferable that the monomer mixture of the cyclopentadiene-based compound and the vinyl aromatic compound is added to the polymerization solvent heated in advance as described above, and a copolymerization reaction is carried out under predetermined conditions while stirring.

Here, it is preferable that the addition of the monomer mixture is divided addition or continuous addition from the viewpoint of controlling heat generation due to polymerization. It is preferable that the divided monomer mixture is added in equal amounts.

In the addition of the monomer mixture, the time required from the start to the completion of the addition is preferably 0.5 to 5 hours, and more preferably 1 to 3 hours.

It is preferable to continue the copolymerization reaction even after the addition of the monomer mixture is completed.

The predetermined conditions in the copolymerization reaction are not particularly limited, but the reaction temperature is usually 150 to 350°C, and preferably 220 to 300°C, the reaction pressure is usually 0 to 2MPaG, and preferably 0 to 1.5MPaG, and the reaction time is usually 1 to 10 hours, preferably 1 to 8 hours, and more preferably 1 to 5 hours.

The physical properties of the copolymers thus obtained are preferably a softening point of 50 to 120°C, a vinyl aromatic compound unit content of 30 to 90% by mass, a bromine value of 30 to 90 g/100 g, and a number average molecular weight of 400 to 1100.

Specifically, the softening point, the vinyl aromatic compound unit content, the bromine value, and the number average molecular weight can be measured by the same methods as those for the hydrogenated petroleum resin at the completion of step 1 (after the devolatilization step) described later in Examples.

<Hydrogenation Reaction Step>

The hydrogenated petroleum resin constituting the hydrogenated petroleum resin pellet of the present invention is preferably produced, for example, by dissolving the copolymer obtained by the aforementioned copolymerization reaction in a hydrogenation solvent in a hydrogenation reaction tank equipped with a heating apparatus and a pressurizing apparatus, adding hydrogen to the solution under predetermined conditions in the presence of a hydrogenation reaction catalyst if necessary, and subjecting the solution to a hydrogenation reaction.

Thus, the hydrogenated petroleum resin defined in the present invention is preferably obtained by hydrogenation (hydrogen addition) of the copolymer (petroleum resin) obtained by the aforementioned copolymerization reaction.

In the case where the constituent component of the petroleum resin includes an aromatic ring, the hydrogenated petroleum resin is preferably obtained by also hydrogenating (hydrogen addition) the aromatic ring.

In addition, the hydrogenated petroleum resin may be a partially hydrogenated type obtained by partially hydrogenating the petroleum resin or may be a completely hydrogenated type obtained by completely hydrogenating the petroleum resin.

Here, examples of the hydrogenation solvent include cyclohexane, methylcyclohexane, dimethylcyclohexane, ethylcyclohexane, and tetrahydrofuran.

The method of dissolving the copolymer obtained by the aforementioned copolymerization reaction in the hydrogenation solvent and supplying the solution to the hydrogenation reaction tank is not particularly limited, and for example, the copolymer and the hydrogenation solvent may be separately supplied to the hydrogenation reaction tank and dissolved therein, or may be previously mixed with each other to form a dissolved mixture and then supplied to the hydrogenation reaction tank.

The mixing ratio of the petroleum resin and the hydrogenated solvent to be used is not particularly limited, but is preferably (petroleum resin):(hydrogenated solvent) = 10:90 to 50:50, and more preferably 20:80 to 40:60 in terms of a mass ratio.

Examples of the hydrogenation reaction catalyst used in the hydrogenation reaction include nickel, palladium, cobalt, platinum, and rhodium.

Predetermined conditions in the hydrogenation reaction are not particularly limited, but the hydrogen-supply pressure is usually 1.0 to 6.0MPaG, the reaction temperature is usually 120 to 300°C, preferably 150 to 250°C, and the reaction time is usually 1 to 17 hours, preferably 2 to 15 hours.

The hydrogenated petroleum resins obtained by the above-described hydrogenating reaction preferably have a viscosity of 0.01 to 1.0 Pa ·s as measured at the treatment temperature in step 1 (devolatilization step) described below in accordance with the Japan Adhesive Industry Association Standard "Hot Melt Adhesive Test Method" JAI-7-1999.

When the viscosity of the hydrogenated petroleum resin obtained by the hydrogenation reaction is within the above range, the volatile organic compound component can be efficiently removed in the devolatilization step described below.

In the present invention, the hydrogenated petroleum resin obtained at the completion of step 1 described below (after the devolatilization step), that is, the hydrogenated petroleum resin from which the volatile organic compound component has been removed may also be simply referred to as a hydrogenated petroleum resin for convenience.

(Properties of Hydrogenated Petroleum Resin Pellet)

The hydrogenated petroleum resin pellet of the present invention has an emission amount of a volatile component defined below of 10 ppm by mass or less, wherein the emission amount of the volatile component is an amount based on the hydrogenated petroleum resin in which all components having a retention time less than the retention time of n-dodecane measured by a head space gas chromatography method are converted to ethylcyclohexane.

In addition, it preferably has the following properties.

From the viewpoint of odor suppression, the emission amount of the volatile component is 10 ppm by mass or less, and preferably 5 ppm by mass or less.

In addition, in the hydrogenated petroleum resin pellet of the present invention, an emission amount of a main decomposition component defined below is preferably 5 ppm by mass or less, and more preferably 3 ppm by mass or less, wherein the emission amount of the main decomposition component is an amount based on the hydrogenated petroleum resin in which tricyclodecenes and styrene measured by a head space gas chromatography method are converted to ethylcyclohexane.

Examples of the tricyclodecenes include tricyclo-3-decene and tricyclo-8-decene.

From the viewpoint of odor suppression, the emission amount of the main decomposition component is preferably 5 ppm by mass or less, and more preferably 3 ppm by mass or less.

That is, it is preferable that the emission amount of the volatile component is 10 ppm by mass or less and the emission amount of the main decomposition component is 5 ppm by mass or less, and it is more preferable that the emission amount of the volatile component is 10 ppm by mass or less, preferably 5 ppm by mass or less, and the emission amount of the main decomposition component is 3 ppm by mass or less.

Specifically, the emission amount of the volatile component and the emission amount of the main decomposition component can be measured by a method described in Examples. The measurement is performed under the conditions of a heating temperature of 150°C and a heating time of 20 minutes.

The shape and size of the hydrogenated petroleum resin pellets of the present invention may be adjusted according to the application and are not particularly limited, but the shape may be spherical, substantially spherical, elliptical spherical, substantially elliptical spherical, hemispherical, cylindrical, substantially cylindrical, rectangular parallelepiped, flake-like, and the like. The shape is preferably spherical, substantially spherical, elliptical spherical, substantially elliptical spherical, cylindrical, substantially cylindrical, or hemispherical, and more preferably spherical, substantially spherical, elliptical spherical, substantially elliptical spherical, or hemispherical. When the outer edge is rounded, the fluidity is excellent, and the compatibility and the transporting capability are excellent.

In addition, the size is preferably 1 to 100 mm, more preferably 3 to 50 mm, and still more preferably 5 to 20 mm in terms of maximum length.

The hydrogenated petroleum resin pellets of the present invention having the above-mentioned properties can be suitably used particularly as a raw material for a hot melt adhesive because they are easy to blend and have little odor. The hot melt adhesive containing the hydrogenated petroleum resin pellets of the present invention as a raw material can be used in various fields such as sanitary goods, various packaging, bookbinding, fiber, woodworking, electrical materials, can making, construction, bag making, and road binders, and can be suitably used particularly for sanitary goods such as paper diapers because of its low odor.

[Method for Producing Hydrogenated Petroleum Resin Pellet]

The hydrogenated petroleum resin pellet of the present invention is not limited to a production method as long as the emission amount of the volatile component defined above is 10 ppm by mass or less, but is preferably produced by the following method.

That is, a method for producing a hydrogenated petroleum resin pellet of the present invention is preferably a method including: step 1 of devolatilizing a hydrogenated petroleum resin in a devolatilization apparatus; step 2 of transferring the hydrogenated petroleum resin from the devolatilization apparatus to a forming apparatus for pelletizing; and step 3 of obtaining a hydrogenated petroleum resin pellet in the forming apparatus for pelletizing, wherein the temperature from the completion of step 1 until the hydrogenated petroleum resin pellet is obtained in step 3 is 235°C or lower, and the time from the completion of step 1 until the hydrogenated petroleum resin pellet is obtained in step 3 is 1 hour or less.

Among them, it is more preferable to use a method in which the temperature from the completion of step 1 until the hydrogenated petroleum resin pellet is obtained in step 3 is 230°C or lower, and the time from the completion of step 1 until the hydrogenated petroleum resin pellet is obtained in step 3 is 40 minutes or less.

Further, as another embodiment of the method for producing a hydrogenated petroleum resin pellet of the present invention, it is also preferable that the method is a method including: step 1 of devolatilizing a hydrogenated petroleum resin in a devolatilization apparatus; step 2 of transferring the hydrogenated petroleum resin from the devolatilization apparatus to a forming apparatus for pelletizing; and step 3 of obtaining a hydrogenated petroleum resin pellet in the forming apparatus for pelletizing, wherein an index value is set so that an emission amount of a volatile component from the obtained hydrogenated petroleum resin pellet does not exceed a target value, and step 2 and step 3 are performed so that the temperature (T) and the time (t) from the completion of step 1 until the hydrogenated petroleum resin pellet is obtained in step 3 satisfy the following formula (1):

$$t \times [\exp(A - E/RT)] \leq \text{index value} \qquad (1)$$

wherein A is a frequency factor, E is an activation energy, and R is a gas constant.

It is also preferable that the frequency factor A and the activation energy E in the formula (1) are represented by the following formulas (2) and (3):

$$A = C_{21} \times \mu^2 + C_{11} \times \mu + C_{01} \qquad (2)$$

$$E = C_{22} \times \mu^2 + C_{12} \times \mu + C_{02} \qquad (3)$$

wherein $\mu$ is a viscosity of the hydrogenated petroleum resin at 200°C, and $C_{21}$, $C_{11}$, $C_{01}$, $C_{22}$, $C_{12}$ and $C_{02}$ are coefficients, respectively.

Here, the viscosity of the hydrogenated petroleum resin refers to the viscosity of the hydrogenated petroleum resin at the completion of step 1 (after the devolatilization step). Specifically, the viscosity can be measured by the method described in Examples.

The emission amount of the volatile component of the hydrogenated petroleum resin at the completion of step 1 (after the devolatilization step) in each of the above methods is more preferably 5 ppm by mass or less, and still more preferably 1 ppm by mass or less.

"The emission amount of the volatile component" in the production method of the present invention has the same meaning as the emission amount of the volatile component defined above.

Each of the preferred production methods will be described in detail below.

<Step 1: Devolatilization Step>

Step 1 is a step of devolatilizing a hydrogenated petroleum resin in a devolatilization apparatus.

A method for reducing the volatile organic compound component by devolatilization and a devolatilization apparatus are not particularly limited, and for example, distillation methods such as (1) thin film distillation and (2) nitrogen stripping can be employed singly or in combination.

(1) Thin Film Distillation

The apparatus for performing the thin film distillation is not particularly limited as long as it is a generally used apparatus, and for example, a centrifugal thin film evaporator can be used.

Specifically, the hydrogenated petroleum resin obtained by the aforementioned hydrogenation reaction, preferably the hydrogenated petroleum resin obtained by performing the removal treatment of the unreacted component and the recovery and removal treatment of the volatile component is supplied to a thin film evaporator, and the volatile organic compound component can be removed while performing thin film distillation under predetermined conditions in the presence of an antioxidant as necessary.

The predetermined conditions in the thin film distillation are not particularly limited, but the treatment temperature is usually 100 to 300°C, the treatment pressure is usually 0.1 to 15 kPa, and the treatment time is usually 5 to 180 minutes.

(2) Nitrogen Stripping

The apparatus for the nitrogen stripping is not particularly limited as long as it is a generally used apparatus, and for example, a rotary evaporator or a flash drum can be used.

Specifically, it is preferable that the hydrogenated petroleum resin obtained through the aforementioned (1) thin film distillation is mixed with nitrogen in a static mixer and then separated from nitrogen in a flash drum.

Predetermined conditions in the nitrogen stripping are not particularly limited, but the treatment temperature is usually 150 to 300°C, the treatment pressure is usually 0.5 to 150 kPa, the nitrogen flow rate is usually 100 to 1,000,000 mL/min with respect to 100 parts by mass of the hydrogenated petroleum resin, and the treatment time is usually 10 to 180 minutes.

From the viewpoint of reducing the odor of the hydrogenated petroleum resin pellet to be obtained, the emission amount of the volatile component of the hydrogenated petroleum resin at the completion of this step 1 (after the devolatilization step) is preferably 5 ppm by mass or less, and more preferably 1 ppm by mass or less.

As described above, in the devolatilization step, the method of reducing the volatile organic compound component contained in the hydrogenated petroleum resin has been described, but the volatile organic compound component can be reduced by applying the same method as that for the hydrogenated petroleum resin to a petroleum resin.

Here, the devolatilization step in the thin film distillation and the nitrogen stripping is preferably performed such that the hydrogenated petroleum resin obtained by the hydrogenation reaction contains 6 to 10% by mass of a low molecular weight hydrogenated petroleum resin having a molecular weight of about 200 to 350.

The content of the low molecular weight hydrogenated petroleum resin having a molecular weight of about 200 to 350 contained in the hydrogenated petroleum resin is preferably 6 to 10% by mass, and more preferably 7 to 8% by mass in the hydrogenated petroleum resin from the viewpoint of not reducing the tackifying performance of the produced hydrogenated petroleum resin.

As the physical properties of the hydrogenated petroleum resin at the completion of this step 1 (after the devolatilization step) thus obtained, it is preferable that a viscosity is 50 to 150 mPa·s, a softening point is 90 to 160°C, a vinyl aromatic compound unit content is 0 to 35% by mass, a bromine value is 0 to 30 g/100 g, and a number average molecular weight is 500 to 1100.

Specifically, the viscosity, the softening point, the vinyl aromatic compound unit content, the bromine value, and the number average molecular weight can be measured by the methods described in Examples.

The timing at which the antioxidant is added is not particularly limited, but the antioxidant is preferably added at a stage before step 1 is performed.

Examples of the antioxidant include a phenol-based antioxidant and a phosphite-based antioxidant.

When an antioxidant is used, the amount thereof is preferably 0.1 to 2.0 parts by mass, and more preferably 0.3 to 1.0 parts by mass, with respect to 100 parts by mass of the hydrogenated petroleum resin.

<Step 2: Step of Transferring Hydrogenated Petroleum Resin>

Step 2 is a step of transferring the hydrogenated petroleum resin from the devolatilization apparatus to a forming apparatus for pelletizing.

The method of transferring the hydrogenated petroleum resin from the devolatilization apparatus to the forming apparatus for pelletizing is not limited, but for example, a method of connecting the devolatilization apparatus and the forming apparatus for pelletizing with a pipe and transferring the molten hydrogenated petroleum resin through the pipe, or a method of storing the hydrogenated petroleum resin discharged from the devolatilization apparatus in a container and remelting it and introducing it into the forming apparatus for pelletizing. From the viewpoint of reducing the temperature and time required for transfer and obtaining the hydrogenated petroleum resin pellet with less odor, a method of connecting the devolatilization apparatus and the forming apparatus for pelletizing with a pipe and transferring the molten hydrogenated petroleum resin through the pipe is preferred.

In the method for producing the hydrogenated petroleum resin pellet of the present invention, it is preferable to adjust the temperature and the time in this step to specific ranges.

The temperature from the completion of step 1 until the hydrogenated petroleum resin pellet is obtained in step 3 is preferably 235°C or lower, more preferably 230°C or lower, and still more preferably 225°C or lower. In addition, the temperature is preferably 150°C or higher from the viewpoint of appropriately introducing the hydrogenated petroleum resin into a forming apparatus for pelletizing and efficiently obtaining pellets.

In addition, "the temperature from the completion of step 1 until the hydrogenated petroleum resin pellet is obtained in step 3" mainly refers to the temperature in this step, but it refers to the maximum temperature from the time when the devolatilization operation in the devolatilization apparatus is finished and the hydrogenated petroleum resin can be discharged to the time when the pellets are discharged from the forming apparatus for pelletizing. It should be noted that the maximum temperature excludes a temporary high temperature (for example, a few minutes) or a local high temperature (for example, near a heating apparatus).

The time from the completion of step 1 until the hydrogenated petroleum resin pellet is obtained in step 3 is preferably 1 hour or less, and more preferably 40 minutes or less. Practically, it is preferably 10 minutes or more.

In addition, "the time from the completion of step 1 until the hydrogenated petroleum resin pellet is obtained in step 3" mainly refers to the time required for this step, but it refers to the time during which the hydrogenated petroleum resin is in a molten state and has fluidity from the time when the devolatilization operation in the devolatilization apparatus is finished and the hydrogenated petroleum resin can be discharged to the time when the pellets are discharged from the forming apparatus for pelletizing. That is, when heating and cooling are repeated in this step, the time during which fluidity is lost due to cooling is excluded.

<Step 3: Step of Obtaining Pellets>

Step 3 is a step of obtaining pellets in a forming apparatus for pelletizing.

Although there is no limitation on a forming apparatus for pelletizing and a method for obtaining pellets, it is preferable to use a forming apparatus for pelletizing shown in FIG. 1. Hereinafter, a preferred forming apparatus will be described with reference to FIG. 1.

In FIG. 1, a forming apparatus 50A includes a forming machine main body 52 and a cooling conveyor 53.

The forming machine main body 52 is arranged so as to face an upstream end side of the cooling conveyor 53 in a conveying direction. The forming machine main body 52 has a cylindrical barrel portion 52A having a heating portion (not shown) and a die 52B for discharging molten resins from an outer peripheral surface of the barrel portion 52A along an axial direction.

Further, the forming machine main body 52 has a cylindrical rotary body' 52C rotatably fitted to the outer peripheral surface of the barrel portion 52A. The rotary body 52C has a plurality of discharge holes 52D like a punching metal, and when the discharge holes 52D are positioned at the die 52B by rotating the outer peripheral surface of the barrel portion 52A, a predetermined amount of molten resins 5A is discharged onto the cooling conveyor 53.

It should be noted that the end point of the temperature and time from the completion of step 1 until the pellet is obtained in step 3 described in the previous step is a point at which the resins are discharged from the discharge holes 52D when the present forming apparatus is used.

The cooling conveyor 53 includes a pair of pulleys 53A and a metallic belt 53B which is a metallic endless belt wound around the pulleys 53A so as to be rotatable.

In addition, the cooling conveyor 53 may be provided with a cooling unit 53D that cools the metallic belt 53B by ejecting cooling water 53C from a back surface of the metallic belt 53B. The method for cooling the metallic belt 53B is not limited to the method of ejecting the cooling water 53C, but may be a method of blowing cold air, a method of bringing a part of the belt into contact with a heat exchanger, or the like.

In order to solidify the resin, it is also preferable to directly blow cold air to the resin. Further, it is preferable that a scraper for scraping off the hydrogenated petroleum resin pellets solidified on the metallic belt is disposed at a lower end of the metallic belt 53B. The pellet thus obtained has any one of a spherical shape, a substantially spherical shape, an ellipsoidal shape, a substantially ellipsoidal shape, and a hemispherical shape.

The hydrogenated petroleum resin pellets obtained by the production method of the present invention preferably have the properties shown in the above section (Properties of Hydrogenated Petroleum Resin Pellet). In particular, the emission amount of the volatile component is preferably 10 ppm by mass or less, and more preferably 5 ppm by mass or less. The emission amount of the main decomposition component is preferably 5 ppm by mass or less, and more preferably 3 ppm by mass or less.

<Production Method Using Index Value>

In the method for producing the hydrogenated petroleum resin pellet of the present invention, it is preferable to set an appropriate temperature and time as described above in the steps from the completion of step 1 until the hydrogenated petroleum resin pellet is obtained in step 3, but the pellet may be produced by setting an index value as described below.

By using the index value, it is possible to appropriately adjust the temperature and time from the completion of step 1 until the hydrogenated petroleum resin pellet is obtained in step 3. Specifically, when the temperature from the completion of step 1 until the hydrogenated petroleum resin pellet is obtained in step 3 is high, the time may be set to be short, and when the time from the completion of step 1 until the hydrogenated petroleum resin pellet is obtained in step 3 is long, the temperature may be set to be low.

That is, as another embodiment, the method for producing the hydrogenated petroleum resin pellet of the present invention is preferably a method including: step 1 of devolatilizing a hydrogenated petroleum resin in a devolatilization apparatus; step 2 of transferring the hydrogenated petroleum resin from the devolatilization apparatus to a forming apparatus for pelletizing; and step 3 of obtaining a hydrogenated petroleum resin pellet in the forming apparatus for pelletizing, wherein an index value is set so that an emission amount of a volatile component from the obtained hydrogenated petroleum resin pellet does not exceed a target value, and step 2 and step 3 are performed so that the temperature (T) and the time (t) from the completion of step 1 until the pellet is obtained in step 3 satisfy the following formula (1):

$$t \times [\exp(A - E/RT)] \leq \text{index value} \qquad (1)$$

wherein A is a frequency factor, E is an activation energy, and R is a gas constant.

Hereinafter, a method for obtaining the coefficients A and E will be described.

The hydrogenated petroleum resin is subjected to heat treatment at a plurality of combinations of temperature T and time t, and then analyzed by head space gas chromatography each time, and the emission amount of the volatile component is measured as an area value S per charged mass obtained by head space gas chromatography. On the basis of a plurality of experimental results obtained in this way, optimization is performed so that the following relationship (approximate expression) holds for the same A and E.

$$\text{Area per unit charged mass} = t \times [\exp(A - E/RT)]$$

Next, an area value per charged mass corresponding to a target concentration in terms of ethylcyclohexane is determined as an index. As described above, in the present invention, the target concentration in terms of ethylcyclohexane, that is, the target value of the emission amount of the volatile component from the hydrogenated petroleum resin pellet is preferably 10 ppm by mass or less, and more preferably 5 ppm by mass or less.

By setting the management time and temperature so as to be equal to or less than the index determined in this way, even when the temperature changes from the devolatilization step (step 1) to the step of obtaining pellets (step 3), thermal decomposition can be suppressed and the amount of the volatile component can be suppressed to a predetermined amount by performing management as described below.

An example of the calculation method is shown below.

Assuming that the time is t (min), the temperature is T (K), and the area value per unit charged mass obtained by the correlation equation is S (Area/g), values corresponding to the plurality of experimental results are as follows.

| t1 | T1 | S1 |
| t2 | T2 | S2 |
| tn | Tn | Sn |

Here, the average area value per unit charged mass, Save, is expressed as follows.

$$\mathrm{Save} = \{t1 \times S1 + t2 \times S2 + ... \, tn \times Sn\} / (t1 + t2 + ... + tn)$$

When this value is smaller than the index, the emission amount of the volatile component can be suppressed. For example, even when the partial temperature exceeds 235°C, which is the upper limit of the preferable temperature range, from the devolatilization step to the pellet forming step, by shortening the time, the emission amount of the volatile component can be controlled to an appropriate amount when the average area value per unit charged weight becomes smaller than the index in the entire step. In this way, although the management method is complicated, there is an advantage in that temperature and time management can be flexibly handled.

Next, when the present invention is applied to a plurality of hydrogenated petroleum resins having different viscosities, the frequency factor and the activation energy can be converted into the following functions by using the viscosity (mPa ·s) of the hydrogenated petroleum resin at 200°C.

Second order function of viscosity: $C_2 \times \mu^2 + C_1 \times \mu + Co$
Viscosity: $\mu$, coefficient: $C_2\ C_1\ C_0$

However, the coefficient varies depending on the physical properties of the hydrogenated petroleum resin.

That is, the frequency factor A and the activation energy E can be represented by the following formulas (2) and (3) using the viscosity of the hydrogenated petroleum resin at 200°C.

$$A = C_{21} \times \mu^2 + C_{11} \times \mu + C_{01} \qquad (2)$$

$$E = C_{22} \times \mu^2 + C_{12} \times \mu + C_{02} \qquad (3)$$

wherein $\mu$ is a viscosity of the hydrogenated petroleum resin at 200°C, and $C_{21}$, $C_{11}$, $C_{01}$, $C_{22}$, $C_{12}$ and $C_{02}$ are coefficients, respectively.

In the present method, it is preferable that step 1, step 2, and step 3 are respectively carried out by the methods described in <Step 1: Devolatilization Step>, <Step 2: Step of Transferring Hydrogenated Petroleum Resin>, and <Step 3 : Step of Obtaining Pellets>.

It is preferable that the hydrogenated petroleum resin pellet obtained as described above has the properties shown in the above section (Properties of Hydrogenated Petroleum Resin Pellet). In particular, the emission amount of the volatile component is preferably 10 ppm by mass or less, and more preferably 5 ppm by mass or less. The emission amount of the main decomposition component is preferably 5 ppm by mass or less, and more preferably 3 ppm by mass or less.

Examples

The present invention will be described in more detail with reference to the following examples, but the present invention is not limited to these examples.

[Measurement and Evaluation]

<Emission Amount of Volatile Component and Emission Amount of Main Decomposition Component>

0.200 g of the hydrogenated petroleum resin obtained in Step 1 and Step 2 of Examples and Step 2 of Comparative Example was collected in a head space bottle (20 mL) and sealed to prepare a sample for measurement.

Using this sample for measurement as an object, a gas chromatograph ("Agilent7607A-7890B" manufactured by Agilent Technologies) was used to measure the emission amount of the volatile component and the emission amount of the main decomposition component under the following measurement conditions.

The value of the emission amount of the volatile component was expressed as the amount based on the hydrogenated petroleum resin by converting the sum of the peak areas of all components having a retention time less than the retention time of n-dodecane, which is a reference standard, to the mass of ethylcyclohexane as a reference standard.

In addition, the value of the emission amount of the main decomposition component was expressed as the amount based on the hydrogenated petroleum resin by converting the sum of the areas of the peaks derived from tricyclo-3-decene, tricyclo-8-decene, and styrene to the mass of ethylcyclohexane as a reference standard.

<Measurement Conditions>

Headspace

·Mode: loop
·Heating temperature and heating time: 150°C, 20 minutes Gas chromatogram
·Column: BPX5 (30 m $\times$ 0.32 mm, membrane thickness 1.0 $\mu$m)
·Oven temperature: raised from 50°C (2 min) to 300°C (15 min) at a rate of 10°C /min.
·Injection temperature: 300°C
·Detection temperature: 300°C
·Detector: FID
·Carrier gas: He
·Flow rate: constant flow, 1.5 mL/min
·Injection amount: 1.0 mL
·Split: 1/2

[Production of Hydrogenated Petroleum Resin]

Production Example 1

(Copolymerization Reaction Step)

90 parts by mass of xylene as a polymerization solvent was supplied to a nitrogen-purged polymerization reaction tank equipped with a stirrer and heated to a temperature of 260°C.

To this polymerization reaction tank, 100 parts by mass of a monomer mixture of a mixture of cyclopentadiene and dicyclopentadiene and styrene (mixing ratio = 1:1 (mass ratio)) was uniformly added dividedly over 3 hours, and a copolymerization reaction was carried out while stirring so that the polymerization reaction system was maintained at a temperature of 260°C. Thereafter, the copolymerization reaction was continued for 115 minutes while maintaining the temperature of 260°C. A petroleum resin which was a copolymer of a cyclopentadiene-based compound and a vinyl aromatic compound was obtained as a copolymeric reaction product.

(Hydrogenation Reaction Step)

A dissolved mixture of the petroleum resin obtained in the aforementioned copolymerization reaction step and ethylcyclohexane as a hydrogenation solvent (mixing ratio = 1:3 (mass ratio)) was supplied to a hydrogenation reaction tank, hydrogen was further supplied to the hydrogenation reaction tank at a supply pressure of hydrogen of 5.0 MPaG, and a hydrogenation reaction was carried out at a reaction temperature of 150 to 250°C for 12 hours, thereby obtaining a hydrogenated petroleum resin.

[Production of Hydrogenated Petroleum Resin Pellet]

Example 1

<Step 1: Devolatilization Step>

A product obtained by adding 7000 ppm by mass of a phenol-based antioxidant (trade name: "Irganox1010" manufactured by BASF) to the hydrogenated petroleum resin obtained in the aforementioned hydrogenation reaction step was supplied to a centrifugal thin film evaporator ("Horizontal Konntro" manufactured by Hitachi Plant Technologies, Ltd.), and the volatile organic compound component was removed while thin film distillation was performed under the following treatment conditions to obtain a hydrogenated petroleum resin at the stage of undergoing thin film distillation.

·Treatment temperature: 210°C
·Treatment pressure: 4 kPa
·Treatment time: 6 minutes

500 g of the hydrogenated petroleum resin subjected to the aforementioned thin film distillation was supplied to a rotary evaporator, and the volatile organic compound component was removed while nitrogen was introduced under the following treatment conditions to obtain a hydrogenated petroleum resin.

·Treatment temperature: 200°C
·Nitrogen flow rate: 1500 mL/min
·Treatment pressure: 100 kPa·s
·Treatment time: 105 minutes

The properties of the hydrogenated petroleum resin obtained were as follows. The measurement method is described in each item.

Softening point: 103.5°C (JIS K2207:2006 is applied)
Vinyl aromatic compound unit content: 20.3% by mass (determined with an infrared spectrophotometer (absorbance 700 cm$^{-1}$))
Bromine value: 5.8 g/100 g (JIS K2605:1996 is applied)
Number average molecular weight (Mn): 514 (GPC measurement method; column: TSK gel G200HXL & G4000HXL, flow rate: 1 mL/min, eluent: THF, temperature: 40°C)
Viscosity: 110 mPa·s (200°C) (Japan Adhesive Industry Association Standard "Hot Melt Adhesive Test Method" JAI-7-1999 is applied)

The hydrogenated petroleum resin obtained in Step 1 was used as a sample, heat-treated at a plurality of temperatures (K) and times (minutes), the area value (Area/g) per charged weight of the volatile component was obtained using head space gas chromatography, and the frequency factor and the activation energy were obtained by an optimization method from the results.
The frequency factor and the activation energy were A = 46.0 and E = 43.8 kcal/mol, respectively. In addition, 5 ppm by mass of ECH (ethylcyclohexane) was set as a reference for an odor at an unnoticeable level in terms of the emission amount of the volatile component, and an index corresponding to this was calculated to be 150.
The following experiment was carried out using the numerical value as an index value in the formula (1) regarding the hydrogenated petroleum resin pellets obtained in Examples. The gas constant at this time was 0.001986 (kcal/K/mol).
When this sample was measured by the aforementioned test method, the emission amount of the volatile component was 1 ppm by mass, and the emission amount of the main decomposition component was 0 ppm by mass.

<Step 2: Step of Transferring Hydrogenated Petroleum Resin, and Step 3: Model Test for Pelletization Step>

As a model test for determining the conditions from the completion of Step 1 until the pellet is obtained in Step 3, the following operation was performed.
Under a nitrogen atmosphere, 0.1925 g of the hydrogenated petroleum resin obtained in Step 1 was collected in a vial, sealed, and immersed in an oil bath of 200°C. By heating for 40 minutes in this state, a thermal history between the devolatilizing step and the pelletizing treatment was simulated to generate a thermally decomposed component.
The emission amount of the volatile component of the hydrogenated petroleum resin pellets obtained by the pelletizing treatment and cooling was 1.5 ppm by mass, and the emission amount of the main decomposition component was 1.2 ppm by mass. It was confirmed that the hydrogenated petroleum resin pellets obtained in Example 1 had an odor at an unnoticeable level.

According to this condition, the value of the left hand side in the formula (1) (t × [exp(A - E/RT)]) is 22, and the temperature and the time from the completion of step 1 until the hydrogenated petroleum resin pellet is obtained in step 3 satisfy the formula (1).

Comparative Example 1

<Step 2: Step of Transferring Hydrogenated Petroleum Resin, and Step 3: Model Test for Pelletization Step>

0.1924 g of the hydrogenated petroleum resin obtained in Step 1 of Example 1 was collected in a vial under a nitrogen atmosphere, sealed and immersed in an oil bath of 240°C. By heating for 40 minutes in this state, a thermal history between the devolatilizing step and the pelletizing treatment was simulated to generate a thermally decomposed component.

The emission amount of the volatile component of the hydrogenated petroleum resin pellets obtained by cooling was 24.0 ppm by mass, and the emission amount of the main decomposition component was 11.2 ppm by mass.

According to this condition, the value of the left hand side in the formula (1) (t × [exp(A - E/RT)]) is 821, and the temperature and the time from the completion of step 1 until the hydrogenated petroleum resin pellet is obtained in step 3 do not satisfy the formula (1).

From the results of Examples, it is understood that the hydrogenated petroleum resin pellets of the present invention are at a level in which the emission amount of the volatile component is less than that of the prior art and the odor is not a concern. In addition, it is understood that according to the production method of the present invention, hydrogenated petroleum resin pellets with less odor can be obtained.

**Claims**

1. A hydrogenated petroleum resin pellet having an emission amount of a volatile component defined below of 10 ppm by mass or less, wherein the emission amount of the volatile component is an amount based on the hydrogenated petroleum resin in which all components having a retention time less than the retention time of n-dodecane measured by a head space gas chromatography method are converted to ethylcyclohexane.

2. The hydrogenated petroleum resin pellet according to claim 1, wherein an emission amount of a main decomposition component defined below is 5 ppm by mass or less, wherein the emission amount of the main decomposition component is an amount based on the hydrogenated petroleum resin in which tricyclodecenes and styrene measured by a head space gas chromatography method are converted to ethylcyclohexane.

3. The hydrogenated petroleum resin pellet according to claim 2, wherein the tricyclodecenes are tricyclo-3-decene and tricyclo-8-decene.

4. The hydrogenated petroleum resin pellet according to claim 2 or 3, wherein the emission amount of the volatile component is 5 ppm by mass or less, and the emission amount of the main decomposition component is 3 ppm by mass or less.

5. The hydrogenated petroleum resin pellet according to any one of claims 1 to 4, wherein the hydrogenated petroleum resin constituting the hydrogenated petroleum resin pellet comprises a hydrogenated product of a copolymer of a cyclopentadiene-based compound and a vinyl aromatic compound.

6. The hydrogenated petroleum resin pellet according to claim 5, wherein the copolymer is obtained by thermal polymerization of a cyclopentadiene-based compound and a vinyl aromatic compound.

7. The hydrogenated petroleum resin pellet according to claim 6, wherein the cyclopentadiene-based compound is at least one selected from the group consisting of cyclopentadiene and dicyclopentadiene.

8. A method for producing a hydrogenated petroleum resin pellet, comprising:

   step 1 of devolatilizing a hydrogenated petroleum resin in a devolatilization apparatus;
   step 2 of transferring the hydrogenated petroleum resin from the devolatilization apparatus to a forming apparatus for pelletizing; and
step 3 of obtaining a hydrogenated petroleum resin pellet in the forming apparatus for pelletizing,
wherein the temperature from the completion of step 1 until the hydrogenated petroleum resin pellet is obtained in step 3 is 235°C or lower, and the time from the completion of step 1 until the hydrogenated petroleum resin pellet is obtained in step 3 is 1 hour or less.

9. The method for producing a hydrogenated petroleum resin pellet according to claim 8, wherein the temperature from the completion of step 1 until the hydrogenated petroleum resin pellet is obtained in step 3 is 230°C or lower, and the time from the completion of step 1 until the hydrogenated petroleum resin pellet is obtained in step 3 is 40 minutes or less.

10. A method for producing a hydrogenated petroleum resin pellet, comprising:

step 1 of devolatilizing a hydrogenated petroleum resin in a devolatilization apparatus;
step 2 of transferring the hydrogenated petroleum resin from the devolatilization apparatus to a forming apparatus for pelletizing; and
step 3 of obtaining a hydrogenated petroleum resin pellet in the forming apparatus for pelletizing,
wherein an index value is set so that an emission amount of a volatile component from the obtained hydrogenated petroleum resin pellet does not exceed a target value, and step 2 and step 3 are performed so that the temperature (T) and the time (t) from the completion of step 1 until the hydrogenated petroleum resin pellet is obtained in step 3 satisfy the following formula (1):

$$t \times [\exp(A - E/RT)] \leq \text{index value} \qquad (1)$$

wherein A is a frequency factor, E is an activation energy, and R is a gas constant.

11. The method for producing a hydrogenated petroleum resin pellet according to claim 10, wherein the frequency factor A and the activation energy E are represented by the following formulas (2) and (3):

$$A = C_{21} \times \mu^2 + C_{11} \times \mu + C_{01} \qquad (2)$$

$$E = C_{22} \times \mu^2 + C_{12} \times \mu + C_{02} \qquad (3)$$

wherein $\mu$ is a viscosity of the hydrogenated petroleum resin at 200°C, and $C_{21}$, $C_{11}$, $C_{01}$, $C_{22}$, $C_{12}$ and $C_{02}$ are coefficients, respectively.

12. The method for producing a hydrogenated petroleum resin pellet according to any one of claims 8 to 11, wherein an emission amount of a volatile component of the hydrogenated petroleum resin at the completion of step 1 is 5 ppm by mass or less.

13. The method for producing a hydrogenated petroleum resin pellet according to any one of claims 10 to 12, wherein the target value of the emission amount of the volatile component from the hydrogenated petroleum resin pellet is 10 ppm by mass or less.

[Fig. 1]

## INTERNATIONAL SEARCH REPORT

| International application No. |
| --- |
| PCT/JP2021/013767 |

**A. CLASSIFICATION OF SUBJECT MATTER**

C08J 3/12(2006.01)i; B29B 7/42(2006.01)i; B29B 9/12(2006.01)i; C08F 8/04(2006.01)i; C08J 99/00(2006.01)i

FI: C08J3/12; B29B7/42; B29B9/12; C08F8/04; C08J99/00

According to International Patent Classification (IPC) or to both national classification and IPC

**B. FIELDS SEARCHED**

Minimum documentation searched (classification system followed by classification symbols)

C08J3/00-3/28;99/00; B29B7/00-11/14; C08F6/00-246/00; 301/00

| Documentation searched other than minimum documentation to the extent that such documents are included in the fields searched | |
| --- | --- |
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | WO 2019/172434 A1 (IDEMITSU KOSAN CO., LTD.) 12 September 2019 (2019-09-12) claims 1-7, 11-16, paragraphs [0011], [0013]-[0015], [0024], [0033]-[0042] | 1-13 |
| A | WO 2019/189296 A1 (MARUZEN PETROCHEMICAL CO., LTD.) 03 October 2019 (2019-10-03) claims 1-4, paragraphs [0007], [0010]-[0018], [0048]-[0049], [0053] | 1-13 |
| A | JP 2012-251050 A (IDEMITSU KOSAN CO., LTD.) 20 December 2012 (2012-12-20) claims 1-3, paragraphs [0004]-[0005], [0011], [0014]-[0023], fig. 1 | 1-13 |
| A | JP 2012-251051 A (IDEMITSU KOSAN CO., LTD.) 20 December 2012 (2012-12-20) claim 1-3, paragraphs [0005]-[0007], [0011], [0015]-[0020], fig. 1 | 1-13 |

☒ Further documents are listed in the continuation of Box C.    ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 15 June 2021 (15.06.2021) | 29 June 2021 (29.06.2021) |

| Name and mailing address of the ISA/ | Authorized officer |
| --- | --- |
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

| International application No. |
|---|
| PCT/JP2021/013767 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 2012-250730 A (IDEMITSU KOSAN CO., LTD.) 20 December 2012 (2012-12-20) claims 1-7, paragraphs [0005], [0016], [0020]-[0027], [0031], fig. 3 | 1-13 |
| A | JP 2015-124246 A (IDEMITSU KOSAN CO., LTD.) 06 July 2015 (2015-07-06) claims 1, 3, paragraphs [0017]-[0019], [0024]-[0026] | 1-13 |
| A | JP 2015-124282 A (ZEON CORP.) 06 July 2015 (2015-07-06) claims 1-3, paragraphs [0016]-[0017], [0022], [0026], [0028]-[0029], [0044], [0052], [0055], [0059], [0061] | 1-13 |

Form PCT/ISA/210 (continuation of second sheet) (January 2015)

## INTERNATIONAL SEARCH REPORT

International application No.

PCT/JP2021/013767

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:
See extra sheet

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**    ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (January 2015)

**INTERNATIONAL SEARCH REPORT**
Information on patent family members

International application No.

PCT/JP2021/013767

| Patent Documents referred in the Report | Publication Date | Patent Family | Publication Date |
|---|---|---|---|
| WO 2019/172434 A1 | 12 Sep. 2019 | (Family: none) | |
| WO 2019/189296 A1 | 03 Oct. 2019 | (Family: none) | |
| JP 2012-251050 A | 20 Dec. 2012 | US 9023944 B2<br>claims 1-3, column 2, lines 7-29, column 3, lines 26-59, column 4, line 36 to column 7, line 17, fig. 1<br>EP 2716668 A1<br>CN 103502288 A<br>KR 10-2014-0020995 A | |
| JP 2012-251051 A | 20 Dec. 2012 | US 2014/0058033 A1<br>claims 1-3, paragraphs [0011]-[0013], [0020]-[0027], [0041]-[0060], fig. 1<br>EP 2716706 A1<br>CN 103502353 A<br>KR 10-2014-0020991 A | |
| JP 2012-250730 A | 20 Dec. 2012 | US 2014/0093340 A1<br>claims 1-7, paragraphs [0009], [0043]-[0050], [0064]-[0089], [0098]-[0100], fig. 3<br>EP 2716575 A1<br>CN 103502116 A<br>KR 10-2014-0022047 A | |
| JP 2015-124246 A | 06 Jul. 2015 | US 2016/0319047 A1<br>claims 1, 3, paragraphs [0032]-[0041], [0055]-[0061]<br>KR 10-2016-0102995 A<br>CN 105849136 A | |
| JP 2015-124282 A | 06 Jul. 2015 | (Family: none) | |

Form PCT/ISA/210 (patent family annex) (January 2015)

**INTERNATIONAL SEARCH REPORT**

| International application No. |
| --- |
| PCT/JP2021/013767 |

<Continuation of Box No. III>

(Invention 1)
The invention in claims 1-7 have the common special technical feature of a "hydrogenated petroleum resin pellet having a volatile component an emission amount of which is 10 mass ppm or less as defined below, wherein the emission amount of the volatile component is an amount with respect to the hydrogenated petroleum resin, in which the whole component having a retention time less than that of normal dodecane measured by headspace gas chromatography is converted to ethylcyclohexane," and thus is classified as invention 1.

(Invention 2)
The invention in claims 8 and 9 shares the common technical feature of a "hydrogenated petroleum resin" with the invention in claim 1 classified as invention 1, but a simple "hydrogenated petroleum resin" does not make a contribution over the prior art in light of the disclosures of JP 2012-251050 A, JP 2012-251051 A, JP 2012-250730 A, etc. and thus said technical feature cannot be considered a special technical feature. In addition, there are no other identical or corresponding technical features between these inventions.
Also, claims 8 and 9 are not dependent on claim 1, and are not substantially identical or equivalent to any of the claims classified as invention 1.
Therefore, the invention in claims 8 and 9 cannot be classified as invention 1, and is thus classified as invention 2.

(Invention 3)
The invention in claims 10-13 shares the common technical feature of a "hydrogenated petroleum resin having a volatile component an emission amount of which is a certain value or less (less than a certain value)" with the invention in claim 1 classified as invention 1, but a simple "hydrogenated petroleum resin" having "a volatile component an emission amount of which is a certain value or less (less than a certain value)" (the certain value is not specified and thus any value can be substantially used) does not make a contribution over the prior art in light of the disclosures of JP 2012-251050 A, JP 2012-251051 A, JP 2012-250730 A, etc. and thus said technical feature cannot be considered a special technical feature. In addition, there are no other identical or corresponding technical features between these inventions.
Also, claims 10-13 are not dependent on claim 1, and are not substantially identical or equivalent to any of the claims classified as invention 1.
Therefore, the invention in claims 10-13 cannot be classified as invention 1.
Moreover, the invention in claims 10-13 shares the common technical feature of a "method for producing a hydrogenated petroleum resin pellet" with the invention in claim 8 classified as invention 2, but a simple "method for producing a hydrogenated petroleum resin pellet" does not make a contribution over the prior art in light of the disclosures of JP 2012-251050 A, JP 2012-251051 A, JP 2012-250730 A, etc. and thus said technical feature cannot be considered a special technical feature. In addition, there are no other identical or corresponding technical features between these inventions.

Form PCT/ISA/210 (extra sheet) (January 2015)

**INTERNATIONAL SEARCH REPORT**

International application No.

PCT/JP2021/013767

Also, claims 10-13 are not dependent on claim 8, and are not substantially identical or equivalent to any of the claims classified as invention 2.

Therefore, the invention in claims 10-13 cannot be classified as invention 2.

Thus, the invention in claims 10-13 cannot be classified as either invention 1 or invention 2, and is thus classified as invention 3.

Form PCT/ISA/210 (extra sheet) (January 2015)

**EP 4 137 530 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019172434 A
- WO 2019189296 A